# EUROPEAN PATENT SPECIFICATION

(11) **EP 2 874 431 B1**
(45) Date of publication and mention of the grant of the patent: **04.09.2019**
(21) Application number: 13193140.4
(22) Date of filing: 15.11.2013
(51) Int. Cl.: H04W 24/10, H04W 36/00, H04W 48/16, H04W 48/02

(54) **PREVENT MEASUREMENTS BY USING BLACKLISTS OF SCRAMBLING CODES**
VERMEIDUNG VON MESSUNGEN DURCH VERWENDUNG VON SCHWARZLISTEN VON VERRSCHLÜSSELUNGSKODES (SCRAMBLING CODES)
ÉVITEMENT DE MESURES PAR APPLICATION DE LISTES NOIRES DE CODES DE CHIFFRAGE (SCRAMBLING CODES)

(43) Date of publication of application: 20.05.2015
(73) Proprietor: Deutsche Telekom AG, 53113 Bonn (DE)
(72) Inventor: Zingler, Olaf, 53227 Bonn (DE); Lehser, Frank, 53175 Bonn (DE)
(74) Representative: Schwöbel, Thilo K.

(56) References cited:
- WO-A2-2012/138124
- US-A1- 2012 196 593
- HUAWEI TECHNOLOGIES CO LTD: "Discussion of Blacklist applied in IDLE mode", 3GPP DRAFT; GP-080521 - DISCUSSION OF BLACKLIST APPLIED IN IDLE MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Malaga, Spain; 20080512 - 20080516, 8 May 2008 (2008-05-08), XP050594137, [retrieved on 2008-05-08]
- RAN2: "LS on Report Strongest Cells for SON", 3GPP DRAFT; R2-106944-LS-SON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, 19 November 2010 (2010-11-19), XP050605569, [retrieved on 2010-11-19]

## Description

### BACKGROUND

The present invention relates inter alia to a method for enhancing the usage of user equipment resources and/or network resources in a mobile communication network by preventing the use of certain radio cells by user equipments in the mobile communication network.

Furthermore, the present invention relates to a mobile or cellular telecommunications network, especially a public land mobile network, provided for enhancing the usage of user equipment resources and/or network resources in a mobile communication network by preventing the use of certain radio cells by user equipments in the mobile communication network.

WO2012/138124 A2 discloses a method for supporting the mobility of a user equipment (UE) in a wireless communication system. The method of WO2012/138124 A2 includes: performing the mobility with a target cell; receiving mobility state estimation (MSE) basis information; updating a mobility counter of the UE based on the MSE basis information; performing the MSE by estimating a mobility state of the UE based on the updated mobility counter of the UE; and scaling a mobility parameter based on the estimated mobility state. HUAWEI TECHNOLOGIES CO LTD: "Discussion of Blacklist applied in IDLE mode", 3GPP DRAFT; GP-080521, XP050594137 discloses a blacklist approach in IDLE mode. RAN2: "LS on Report Strongest Cells for SON", 3GPP DRAFT; R2-106944-LS-SON, XP050605569 considers extending the maximum number of cells to be reported by a user equipment for SON for UMTS and CDMA.Within mobile communication networks, the mobility of user equipments (also called mobile stations or terminals) is based on exploring the surrounding area of a given cell resulting in event reports or periodic measurements to identify if better radio conditions can be given to a terminal. In a closed network layer (i.e. of the same radio access technology and typically using the same frequency or frequency band) this is typically given for a defined frequency range. In this layer the measurements must be triggered at least when the signal strength of the cell is falling below a certain threshold to ensure the identification of neighbour cells, i.e. possible target cells, to perform reliable handovers.

The situation is more complex in case that other frequency layers, either different frequency layers (or frequency bands) of the same radio access technology or even other radio access technologies are to be considered for measurements, e.g. in case that a first frequency layer (of a first radio access technology) comprises insufficient radio coverage (also called a coverage hole) in a geographical area that is served by a second frequency layer (of a second radio access technology).

Such inter radio access technology (inter-RAT) measurements and/or inter-frequency measurements are typically more complex because the user equipment (or the terminal) needs to change the typical frequency (or frequency range) and has to perform a synchronization in downlink to these other layers or RATs.

In a territorial border situation with mobile communication networks (especially public land mobile networks) at each side of the border line and without the activated feature "Inter PLMN handover", but e.g. with roaming option, the situation is even more complex. On the one hand, the roaming (i.e. the considered user equipment leaving the first mobile communication network and joining the second mobile communication network across the territorial border) is a wanted behavior if the customer leaves the coverage area of the own mobile communication network (or public land mobile network), and on the other side, the user equipment (i.e. the customer) shall be kept to be served by the own mobile communication network in case that the radio situation is sufficient for the user equipment concerned. In these territorial border situations, the planning of frequencies to be used by the radio cells along the territorial border is often unsatisfactory because different concepts and approaches coming together and are often not harmonized or only harmonized in a sub-optimal fashion. This means that the planning regarding the distribution of
-- the GSM-frequency channels (for 2G mobile communication networks, i.e. second generation mobile communication networks such as GSM (Global System for Mobile communication)), or
-- the UMTS primary scrambling codes (for 3G mobile communication networks, i.e. third generation mobile communication networks such as UMTS (Universal Mobile Telecommunication System)), or
-- the LTE physical cell identifiers (for 4G mobile communication networks, i.e. fourth generation mobile communication networks such as LTE (Long Term Evolution)) typically involves interference situations with comparably bad effects on the customer experience.

The differences of the procedures handover and reselection with their respective measurements is as follows:
A handover is a cell change of the user equipment in connected mode: in this case the data transfer has a high priority; therefore the handover must be as fast as possible. Some signalling (i.e. the exchange of signalling information) is done to improve the handover speed by the preparation of resources and forwarding the data buffers. For the speed of such a cell change to be as short as possible, a very close network-terminal cooperation and controlled procedure is required.
In contrast, for a cell-reselection process in idle mode of the user equipment (i.e. when no data transfer of user data is typically needed), the requirements on speed and on-going data transfer are low; therefore, it is sufficient that the user equipment just changes the cell it camps on and of which it observes the control channels. There are also situations, where the user equipment is required to announce the cell-change to the mobile communication network, e.g. in case of a location or tracking area update, but also for this process the requirement regarding real-time data exchange of user data is lower.

For both methods to change a cell, measurements of the radio air interface and the observation of different cells are needed. The user equipment continuously measures radio cells in the vicinity of the serving radio cell, and the user equipment or network nodes decide on changing the serving radio cell, typically based on operator defined thresholds. These measurements are typically complex, might need special time gaps (especially for inter-frequency and/or inter-RAT measurements) and in any case need processing resources as well as power resources of the user equipment as well as of the involved nodes of the mobile communication network. Therefore, there is a need to optimize such measurements.

### SUMMARY

An object of the present invention is to provide a method for enhancing the usage of user equipment resources and/or network resources in a mobile communication network by preventing the use of certain radio cells by user equipments in the mobile communication network such that measurements regarding the radio environment of a user equipment or at least the transmission (to the mobile communication network) of the results regarding such measurements can be avoided or prevented for such radio cells resulting in a more effective usage of the resources of the user equipment as well of the resources of the mobile communication network.

The object of the present invention is achieved by a method according to claim 1 a mobile communications network according to claim 10, computer programs according to claims 11 and 12, as well as corresponding computer program products according to claims 13 and 14.

According to the present invention it is thereby advantageously possible to block the usage, and preferably also the measurement, of specific scrambling codes by the user equipment.

It is disclosed that the measurement configuration information can be part of a user specific configuration information (specific to the user equipment), transmitted to the user equipment e.g. via a dedicated control channel. Alternatively, it is disclosed that the measurement configuration information can be transmitted using a broadcast control channel relevant for all user equipments camping or actively connected to the serving cell of the mobile communication network.
Within the context of the presented invention, the measurement configuration information might be transmitted partly as a user specific configuration information (using a dedicated control channel) and partly using a broadcast control channel. This includes the following option, the measurement configuration information can also be split into a part which contains the information of the blacklisted scrambling codes transmitted via a broadcast control channel, e.g. as part of a system information block and an additional part containing further measurement configuration data, e.g. describing the intended usage of the blacklisted scrambling codes as for example to be considered in active mode mobility and/or SON, transmitted via a user specific configuration information (using a dedicated control channel).

It is especially advantageous according to the present invention that the uplink signalling load can be reduced. This is especially the case if among the possible target radio cells (or among the corresponding target base station entities), i.e. the radio cells providing radio coverage at the location of the user equipment, there are radio cells that are blacklisted. This means that the blacklist information (transmitted from the serving base station entity to the user equipment, typically via the measurement configuration information) refers to at least one blacklisted scrambling code associated with at least one (or all) of the possible target base station entities (or target radio cells). The reduction of uplink signalling load is, of course, maximized in case that all of the target base station entities that are available to the user equipment (in a given radio environment situation) are blacklisted (i.e. their respective scrambling codes are blacklisted by the blacklist information comprising parts related to such scrambling codes). This means that there is no uplink transmission of potential measurement results (of possible radio environment measurements of the user equipment towards these target base station entities) at least in case that all the (receivable) possible target base station entities (or target radio cells) are blacklisted.

Additionally, it is advantageously possible according to the present invention that the time needed to scan through the list of target base station entities to be measured - i.e. the time to perform or conduct the measurements corresponding to the measurement configuration information - can be reduced. Typically, the entire range of possible scrambling codes (preferably the 0...511 primary scrambling codes) - as defined by the 3GPP standard - has to be considered by the user equipment. In case that, at least partially, the scrambling codes of this list are blacklisted, the speed of conducting the measurement can be increased (i.e. the required time to perform such measurements reduced) and hence the local user equipment resources to perform these measurements can be likewise reduced, especially the power consumption reduced.

According to the present invention, the telecommunications network (used in the inventive method and comprised in the inventive system) is a cellular telecommunications network, especially a public land mobile network, comprising a (likewise cellular) access network. At least one user equipment (but preferably a plurality and still more preferably a multitude of user equipments) is located in a radio cell of the access network of the cellular telecommunications network and is registered with the cellular telecommunications network via a serving base station entity, wherein the radio cell is served by the base station entity, or NodeB, as the serving base station entity (or serving NodeB) especially according to the UMTS (Universal Mobile Telecommunication System) radio access technology.

According to the present invention, the user equipment is located in a radio cell of the access network of the mobile communication network, wherein the radio cell is served by the base station entity, i.e. the serving base station entity. The user equipment receives, of course, radio signals from the serving base station entity, but typically also from other radio cells, i.e. from other base station entities serving other radio cells. Such other base station entities (whose radio signals can be received by the user equipment at a given location, and that are typically located in the vicinity of the serving base station entity and/or in the vicinity of the user equipment) are generally called target base station entities as these are possible candidates for mobility procedures such as handover (in connected mode of the user equipment) and/or cell reselection (in idle mode of the user equipment). Therefore, the user equipment at least potentially receives radio signals not only from the serving base station entity but also from target base station entities. In a 3G (UMTS) mobile communication network, each base station entity has assigned a scrambling code. Consequently, each target base station entity also has assigned a scrambling code. According to the present invention, the serving base station entity transmits a blacklist information regarding scrambling codes to the user equipment, wherein the blacklist information refers to at least one blacklisted scrambling code of at least one blacklisted base station entity (but typically to a plurality of blacklisted scrambling codes (of a plurality of blacklisted base station entities) that shall be avoided or prevented to be used by the user equipment.

The consequence of the transmission of the blacklist information according to the present invention is that in case of the user equipment receiving - in a first step - a measurement configuration information from the mobile communication network to perform - in a second step - certain measurements of possible target base station entities, the at least one blacklisted base station entity (but typically a plurality of base station entities) - corresponding to the at least one blacklisted scrambling code (typically a plurality of blacklisted scrambling codes) - is (are) either avoided (or prevented) to be measured in the second step or a measurement result corresponding to the at least one blacklisted scrambling code (typically a plurality of base station entities) is avoided (or prevented) to be transmitted to the (serving) base station entity.
It is preferred not only to avoid (or prevent) the transmission, by the user equipment, of the measurement results towards the serving base station entity (regarding the blacklisted scrambling codes/target base station entities) but also to avoid (or prevent) performing the corresponding measurements.
According to the present invention, and especially according to all embodiments thereof, it should be understood that the behaviour of the user equipment - regarding performing measurements and/or regarding reporting (or not reporting) of measurements - with respect of those radio cells (or scrambling codes) that are not comprised in the blacklist information (or are not concerned by the blacklist information) shall be performed as if the blacklist information would not have been transmitted to the user equipment, i.e. these measurements and/or this reporting of measurements shall typically be performed according to the requirements as defined by the measurement configuration information.

According to the present invention, the measurement configuration information is transmitted using a control channel of the mobile communication network.

Especially, the following variants or alternatives of the measurement configuration information and of the scrambling code blacklist settings are possible and preferred according to the present invention, depending on whether the serving base station entities being either 4G base station entities or 3G base station entities, depending on whether the user equipment being either in active (connected) mode or in idle mode, and depending on whether the measurement configuration information and the blacklist settings are either used for mobility purposes regarding the user equipment being in active/idle mode or used of SON (Self Organizing Network) purposes regarding the user equipment being in active/idle mode:
-- a separate measurement configuration information and a corresponding separate blacklist information regarding blacklisted scrambling codes refer to the active (or connected) mode of the user equipment for active mode mobility purposes and in view of the serving base station entity serving a 3G radio cell (i.e. the serving base station entity being a 3G or UMTS base station entity),
-- a separate measurement configuration information and a corresponding separate blacklist information regarding blacklisted scrambling codes refer to the idle mode of the user equipment (listening to the serving base station entity) for idle mode mobility purposes and in view of the serving base station entity serving a 3G radio cell (i.e. the serving base station entity being a 3G or UMTS base station entity),
-- a separate measurement configuration information and a corresponding separate blacklist information regarding blacklisted scrambling codes refer to the active (or connected) mode of the user equipment and for active mode mobility purposes in view of the serving base station entity serving a LTE radio cell (i.e. the serving base station entity being a LTE base station entity),
-- a separate measurement configuration information and a corresponding separate blacklist information regarding blacklisted scrambling codes refer to the idle mode of the user equipment (listening to the serving base station entity) for idle mode mobility purposes and in view of the serving base station entity serving a LTE radio cell (i.e. the serving base station entity being a LTE base station entity),
-- a separate measurement configuration information and a corresponding separate blacklist information regarding blacklisted scrambling codes refer to the active (or connected) mode of the user equipment for active mode SON purposes and in view of the serving base station entity serving a 3G radio cell (i.e. the serving base station entity being a 3G or UMTS base station entity),
-- a separate measurement configuration information and a corresponding separate blacklist information regarding blacklisted scrambling codes refer to the idle mode of the user equipment (listening to the serving base station entity) for idle mode SON purposes and in view of the serving base station entity serving a 3G radio cell (i.e. the serving base station entity being a 3G or UMTS base station entity),
-- a separate measurement configuration information and a corresponding separate blacklist information regarding blacklisted scrambling codes refer to the active (or connected) mode of the user equipment and for active mode SON purposes in view of the serving base station entity serving a LTE radio cell (i.e. the serving base station entity being a LTE base station entity),
-- a separate measurement configuration information and a corresponding separate blacklist information regarding blacklisted scrambling codes refer to the idle mode of the user equipment (listening to the serving base station entity) for idle mode SON purposes and in view of the serving base station entity serving a LTE radio cell (i.e. the serving base station entity being a LTE base station entity).

According to the present invention, it is preferred that for each of these different variants, a different variant of the blacklist information is used during the first step of the inventive method.

Especially, the present invention advantageously addresses a method as well as a cellular telecommunications network (or mobile communication network) and a system for enhancing the usage of user equipment resources and/or network resources in a mobile communication network by preventing the use of certain radio cells by user equipments in the mobile communication network. All preferred embodiments of the inventive method also apply - mutatis mutandis - to the cellular telecommunications network and to the system for an improved operation of a cellular telecommunications network according to the present invention.

According to the present invention, it is preferred that the measurement configuration information comprises the blacklist information.

Thereby it is advantageously possible that the measurement configuration information is complete insofar as also the definition of the blacklist information is given.

Furthermore, it is preferred according to the present invention that the scrambling codes of the target base station entities are the primary scrambling codes of the target base station entities.

According to a further variant of the present invention (that can be combined with any embodiment of the present invention), the blacklisted primary scrambling codes cover at least the difference of the overall possible primary scrambling code range with the primary scrambling codes of the preferred scrambling codes. The result thereof is that only the preferred scrambling codes are used by the user equipment and all other scrambling codes are to be prevented (or avoided) by means of implementing the inventive functionality of providing the blacklist information.

Still furthermore, it is preferred according to the present invention that the target base station entities are UMTS (Universal Mobile Telecommunication System) base station entities.

Furthermore, it is preferred according to the present invention that the serving base station entity is a UMTS (Universal Mobile Telecommunication System) base station entity, and the measurement configuration information refers to an intra-RAT (radio access technology) measurement.

Thereby, it is advantageously possible that for the case of both the serving and the target base station entities being 3G radio cells (i.e. UMTS base station entities), the inventive blacklisting can be applied.

Still furthermore, it is preferred according to the present invention that the serving base station entity is an LTE (Long Term Evolution) base station entity, and the measurement configuration information refers to an inter-RAT (radio access technology) measurement.

Thereby, it is advantageously possible that for the case of the serving base station entity being a LTE base station entity, and the target base station entity being a 3G base station entity (i.e. UMTS base station entity), the inventive blacklisting can be applied.

Furthermore, it is also preferred according to the present invention that the measurement configuration information
-- refers to active mode mobility measurements and/or to active mode SON-related measurements
-- refers to idle mode mobility measurements, especially concerning cell-reselection, and/or to active mode SON-related measurements.

This means that especially the following combinations are preferred:
-- both the serving and the target base station entities being 3G radio cells, and the measurement configuration information refers to active mode mobility measurements or to active mode SON-related measurements or to both (i.e. to both, active mode mobility measurements and active mode SON-related measurements);
-- both the serving and the target base station entities being 3G radio cells, and the measurement configuration information refers to idle mode mobility measurements, especially concerning cell-reselection or to idle mode SON-related measurements or to both (i.e. to both, idle mode mobility measurements and idle mode SON-related measurements);
-- the serving base station entity is an LTE (Long Term Evolution) base station entity, and the measurement configuration information refers to an inter-RAT (radio access technology) measurement (i.e. the target base station entities being 3G radio cells), and the measurement configuration information refers to active mode mobility measurements or to active mode SON-related measurements or to both (i.e. to both, active mode mobility measurements and active mode SON-related measurements);
-- the serving base station entity is an LTE (Long Term Evolution) base station entity, and the measurement configuration information refers to an inter-RAT (radio access technology) measurement (i.e. the target base station entities being 3G radio cells), and the measurement configuration information refers to idle mode mobility measurements, especially concerning cell-reselection, or to idle mode SON-related measurements or to both (i.e. to both, idle mode mobility measurements and idle mode SON-related measurements).

According to the first above mentioned alternative, the intra-3G (UMTS) measurements used in connected mode (active mode) are performed taking into consideration the measurement configuration information as well as the blacklist information. The blacklist information is preferably an optional information element which contains blacklisted 3G scrambling codes, especially via their primary scrambling codes. This blacklist information (referring to the active mode of the user equipment) is used to limit the amount of 3G cell measurements of the user equipment (in active mode) and their reports towards the serving base station entity. According to the present invention, this either refers to active mode mobility measurements or to active mode SON-related measurements, especially to cover Intra-3G ANR, or to both. Preferably, the SIB 12 (System Information Block 12) comprises this blacklist information in case of intra-3G active mode mobility measurements or to active mode SON-related measurements or to both.

According to the second above mentioned alternative, the intra-3G (UMTS) measurements used in idle mode are performed taking into consideration the measurement configuration information as well as the blacklist information. The blacklist information is preferably an optional information element which contains blacklisted 3G scrambling codes, especially via their primary scrambling codes. This blacklist information (referring to the idle mode of the user equipment) is used to limit the amount of 3G cell measurements of the user equipment (in idle mode) and their reports towards the serving base station entity. According to the present invention, this either refers to idle mode mobility measurements or to idle mode SON-related measurements, especially to cover logged mode Minimization of Drive Tests (MDT), or to both.

According to the third above mentioned alternative, the inter-RAT (LTE towards UMTS) measurements (measurement configuration information) used in connected mode (active mode) are performed taking into consideration the measurement configuration information as well as the blacklist information. The blacklist information is preferably an optional information element which contains blacklisted 3G scrambling codes, especially via their primary scrambling codes. This blacklist information (referring to active or connected mode of the user equipment) is used to limit the amount of 3G cell measurements of the user equipment (in active mode) and their reports towards the serving base station entity. According to the present invention, this either refers to active mode mobility measurements or to active mode SON-related measurements, especially to cover Intra-3G ANR), or to both.

According to the fourth above mentioned alternative, the InterRAT (LTE towards UMTS) measurements (measurement configuration information) used in idle mode are performed taking into consideration the measurement configuration information as well as the blacklist information. The blacklist information is preferably an optional information element which contains blacklisted 3G scrambling codes, especially via their primary scrambling codes. This blacklist information (referring to idle mode of the user equipment) is used to limit the amount of 3G cell measurements of the user equipment (in idle mode) and their reports towards the serving base station entity. According to the present invention, this either refers to idle mode mobility measurements or to idle mode SON-related measurements, especially to cover logged mode Minimization of Drive Tests (MDT), or to both.

According to the second alternative, the conventional intra-3G (UMTS) measurements (measurement configuration information) as used for idle mode comprises - according to the present invention - the blacklist information, i.e. an optional information element, which contains blacklisted 3G cell identifiers. Preferably, the SIB 11 (System Information Block 11) comprises this blacklist information in case of intra-3G idle mode mobility or to idle mode SON-related measurements or to both.

For all four alternatives, the description of the not allowed (blacklisted) primary scrambling codes of a 3G network has to be able to cover at least the Non-"Preferential code for UTRA"-sequences according to the ERC Recommendation 01-01. This means that the difference of the overall possible primary scrambling code range (0...511), on the one hand, and the primary scrambling codes of the preferred scrambling codes groups, in the other hand, shall at least be blacklisted.

According to the third alternative, the LTE-InterRAT measurement (i.e. the serving base station entity being a 4G base station entity and the target base station entity is a 3G base station entity) used for active mode mobility (MeasObjectUTRA from LTE towards 3G) comprises - according to the present invention - the blacklist information, i.e. an optional information element which contains blacklisted 3G (primary) scrambling codes.

According to the fourth alternative, the LTE-InterRAT measurement configuration information (i.e. the serving base station entity being a 4G base station entity and the target base station entity is a 3G base station entity) used for idle mode mobility comprises - according to the present invention - the blacklist information, i.e. an optional information element which contains blacklisted 3G (primary) scrambling codes. Preferably, the SIB 6 (System Information Block 6) in LTE comprises this blacklist information in case of LTE-InterRAT and idle mode mobility.

It is advantageous according to the present invention that, e.g. in case of frequent handover failures and/or call drops towards a specific target base station entity (i.e. target radio cell), this target base station entity / radio cell, i.e. the corresponding scrambling code, is blacklisted such that future handover failures and/or call drops may be avoided or at least their number and/or their repetition rate be reduced, especially in case that features like MRO (Mobility Robustness) are not effective.

Furthermore, it is preferred according to the present invention that the measurement configuration information compromises the blacklist information for the special purpose of Self Organizing Network (SON), especially for the functionality "Report Strongest Cells For SON". According to the present invention, the blacklist information is either a blacklist information referring to the active mode of the user equipment or a blacklist information referring to the idle mode of the user equipment.

To use the transmission of the blacklist information for SON purposes (either for active mode or for idle mode of the user equipment) has the advantage that the quality of the inter-RAT-ANR measurement reports (reportStrongestCellsForSON) can be enhanced, because the amount of cells in this report is typically limited, e.g. only one cell. In this case a cell with the measurement purpose (field strength and/or quality) of the own 3G network can be reported even if a 3G cell(s) of the foreign operator is dominated (assumption for this case that this is the strongest 3G cell).

Still furthermore, it is preferred according to the present invention that the at least one blacklisted base station entity to be avoided (or prevented) corresponds to a dominating base station entity (umbrella base station entity).

It is thereby advantageously possible according to the present invention that - especially for SON (Self Organizing Network) purposes where only the strongest cell is reported to the serving base station entity, blacklisting of the dominating base station entity makes it possible know about further available 3G cells, e.g. for traffic steering purposes and/or for energy saving purposes.

The present invention also relates to a mobile communication network, especially public land mobile network, according to claim 10.

Also, a system for enhancing the usage of user equipment resources and/or network resources in a mobile communication network by preventing the use of certain radio cells by user equipments in the mobile communication network is disclosed, wherein the system comprises the mobile communication network and the user equipment, wherein the cellular telecommunications network comprises an access network, wherein a user equipment is located in a radio cell of the access network, the radio cell being served by a serving base station entity, wherein the user equipment - besides receiving radio signals from the serving base station entity - at least potentially receives radio signals also from target base station entities, each target base station entity having assigned a scrambling code, respectively, wherein a blacklist information is transmitted from the serving base station entity to the user equipment regarding scrambling codes, the blacklist information referring to at least one blacklisted scrambling code of at least one blacklisted base station entity that shall be prevented (or avoided) to be used by the user equipment, wherein the system is configured such that:
-- a measurement configuration information is transmitted from the mobile communication network to the user equipment, the measurement configuration information comprising an indication, to the user equipment, to perform measurements with regard to the target base station entities, wherein a control channel of the mobile communication network is used for the transmission of the measurement configuration information,
-- the requested measurements are conducted by the user equipment and thereby a local network information obtained,
-- the local network information is transmitted from the user equipment to the base station entity,
wherein the at least one blacklisted base station entity corresponding to the at least one blacklisted scrambling code is either prevented to be measured or a measurement result corresponding to the at least one blacklisted scrambling code prevented to be transmitted to the base station entity.

Furthermore, the present invention relates to a program according to claim 11 and to a program according to claim 12.

The present invention also relates to a computer program product according to claim 13 and a computer program product according to claim 14.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

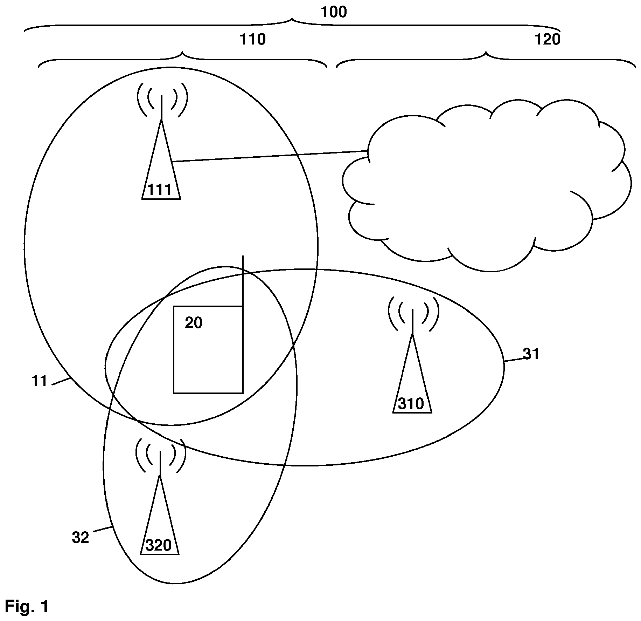

Figure 1 schematically illustrates a mobile (or cellular) telecommunications network and a further cellular telecommunications network, as well as a user equipment being located in the radio coverage area of different radio cells of the mobile communication network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, especially a public land mobile network 100, is schematically shown, the mobile communication network 100 comprising an access network 110 (or a radio access network 110) and a core network 120. The mobile communication network 100 is preferably a cellular telecommunications network comprising typically a plurality of network cells or radio cells. A radio cell typically comprises at least one base station entity. One radio cell 11 is exemplarily represented in Figure 1, the radio cell 11 comprising one base station entity 111.

According to the present invention, a user equipment 20 camps on the radio cell 11 or on the mobile communication network 100 or on the base station entity 111. This is represented in Figure 1 by means of showing the user equipment 20 within the radio cell 11. The base station entity 111 is the serving base station entity for the user equipment 20.

The user equipment 20 comprises a radio interface in a conventionally known manner, typically for accessing the mobile communication network 100 using different radio access technologies, such as 3G (UMTS) or 4G (LTE). The radio interface is a radio interface according to a mobile communication standard, like 3GPP.

Besides receiving radio signals from the serving base station entity 111, the user equipment 20 also receives - at least potentially - radio signals from other base station entities, hereinafter also called target base station entities 310, 320. As 3G base station entities (i.e. base station entities according to the UMTS standard), each target base station entity 310, 320 has a scrambling code that is assigned to this target base station entity 310, 320.

According to the present invention, the serving base station entity 111 transmits a blacklist information regarding scrambling codes to the user equipment 20, wherein the blacklist information refers to at least one blacklisted scrambling code of at least one blacklisted base station entity (of the target base station entities) that shall be avoided (or prevented) to be used by the user equipment 20.

In case that a measurement configuration information is transmitted - in a first step - from the mobile communication network 100 to the user equipment 20, instructing (or requiring) the user equipment 20 to perform measurements - in a second step - with regard to target base station entities 310, 320, the transmission of the blacklist information according to the present invention results in that the at least one blacklisted base station entity (but typically a plurality of base station entities) - corresponding to the at least one blacklisted scrambling code (typically a plurality of blacklisted scrambling codes) - is (are) either avoided (or prevented) to be measured in the second step or a measurement result corresponding to the at least one blacklisted scrambling code (typically a plurality of base station entities) is avoided (or prevented) to be transmitted to the (serving) base station entity 111.

The blacklisting of certain scrambling codes of the target base station entities 310, 320 (and hence the blacklisting of those target base station entities themselves) can be applied to either the situation of the user equipment 20 being in active (or connected) mode or to the situation of the user equipment 20 being in idle (or deactivated) mode. It is preferred according to the present invention, that a different (or separate) measurement configuration information (i.e. a different measurement configuration information transmitted from the serving base station entity to the user equipment) is used and a different (or separate) blacklisting (i.e. a different set of blacklisted scrambling codes, especially by means of a different blacklist information) is applied to the eight different cases or alternatives of possible situations, namely:
-- the user equipment 20 being in active (or connected) mode and in view of the serving base station entity 111 being a 3G radio cell, wherein the blacklisting is used for mobility purposes,
-- the user equipment 20 being in idle mode of the user equipment (listening to the serving base station entity 111) and in view of the serving base station entity 111 being a 3G radio cell, wherein the blacklisting is used for mobility purposes,
-- the user equipment 20 being in active (or connected) mode and in view of the serving base station entity 111 being a LTE radio cell, wherein the blacklisting is used for mobility purposes,
-- the user equipment 20 being in idle mode of the user equipment 20 (listening to the serving base station entity 111) and in view of the serving base station entity 111 being a LTE radio cell, wherein the blacklisting is used for mobility purposes,
-- the user equipment 20 being in active (or connected) mode and in view of the serving base station entity 111 being a 3G radio cell, wherein the blacklisting is used for SON (Self Organizing Network) purposes,
-- the user equipment 20 being in idle mode of the user equipment (listening to the serving base station entity 111) and in view of the serving base station entity 111 being a 3G radio cell, wherein the blacklisting is used for SON (Self Organizing Network) purposes,
-- the user equipment 20 being in active (or connected) mode and in view of the serving base station entity 111 being a LTE radio cell, wherein the blacklisting is used for SON (Self Organizing Network) purposes,
-- the user equipment 20 being in idle mode of the user equipment 20 (listening to the serving base station entity 111) and in view of the serving base station entity 111 being a LTE radio cell, wherein the blacklisting is used for SON (Self Organizing Network) purposes.

## Claims

1. Method for enhancing the usage of user equipment resources and/or network resources in a mobile communication network (100) by preventing the use of certain radio cells by user equipments in the mobile communication network (100), wherein the mobile telecommunications network (100) comprises an access network (110), wherein a user equipment (20) is located in a radio cell (11) of the access network (110), the radio cell (11) being served by a serving base station entity (111), wherein the user equipment (20) - besides receiving radio signals from the serving base station entity (111) - at least potentially receives radio signals also from target base station entities (310, 320), each target base station entity (310, 320) having assigned a scrambling code, respectively,
wherein the serving base station entity (111) transmits a blacklist information regarding scrambling codes to the user equipment (20), the blacklist information referring to at least one blacklisted scrambling code of at least one blacklisted base station entity that shall be prevented to be used by the user equipment (20), wherein the method comprises the following steps:
-- transmitting, in a first step, a measurement configuration information from the mobile communication network (100) to the user equipment (20), the measurement configuration information comprising an indication, to the user equipment (20), to perform measurements with regard to the target base station entities (310, 320), wherein a control channel of the mobile communication network (100) is used for the transmission of the measurement configuration information, wherein the measurement configuration information is split into a part, which contains the blacklist information and which is transmitted via a broadcast control channel, and an additional part, which contains further measurement configuration data describing the intended usage of the at least one blacklisted scrambling code and which is transmitted via a user specific configuration information using a dedicated control channel,
-- conducting, by the user equipment (20) and in a second step subsequent to the first step, the requested measurements and thereby obtaining a local network information,
-- transmitting, in a third step subsequent to the second step, the local network information from the user equipment (20) to the serving base station entity (111),
wherein the at least one blacklisted base station entity corresponding to the at least one blacklisted scrambling code is either prevented to be measured in the second step or a measurement result corresponding to the at least one blacklisted scrambling code prevented to be transmitted to the base station entity (111) in the third step.

2. Method according to claim 1, wherein the scrambling codes of the target base station entities (310, 320) are the primary scrambling codes of the target base station entities, wherein especially the blacklisted primary scrambling codes covers at least the difference of the overall possible primary scrambling code range with the primary scrambling codes of the preferred scrambling codes.

3. Method according to one of the preceding claims, wherein the target base station entities (310, 320) are UMTS (Universal Mobile Telecommunication System) base station entities.

4. Method according to one of the preceding claims, wherein the serving base station entity (111) is a UMTS (Universal Mobile Telecommunication System) base station entity, and the measurement configuration information refers to an intra-RAT (radio access technology) measurement.

5. Method according to one of the preceding claims, wherein the serving base station entity (111) is an LTE (Long Term Evolution) base station entity, and the measurement configuration information refers to an inter-RAT (radio access technology) measurement.

6. Method according to one of the preceding claims, wherein the measurement configuration information refers to active mode mobility measurements.

7. Method according to one of the preceding claims, wherein the measurement configuration information refers to idle mode mobility measurements, especially concerning cell-reselection.

8. Method according to one of the preceding claims, wherein the measurement configuration information compromises the black list information for the special purpose of Self Organizing Network, especially for the functionality "Report Strongest Cells For SON".

9. Method according to one of the preceding claims, wherein the at least one blacklisted base station entity to be avoided corresponds to a dominating base station entity (umbrella base station entity).

10. Mobile communications network (100), especially public land mobile network, for enhancing the usage of user equipment resources and/or network resources in the mobile communication network (100) by preventing the use of certain radio cells by user equipments in the mobile communication network (100), wherein the mobile telecommunications network (100) comprises an access network (110), wherein a user equipment (20) is located in a radio cell (11) of the access network (110), the radio cell (11) being served by a serving base station entity (111), wherein the user equipment (20) - besides receiving radio signals from the serving base station entity (111) - at least potentially receives radio signals also from target base station entities (310, 320), each target base station entity (310, 320) having assigned a scrambling code, respectively, wherein a blacklist information is transmitted from the serving base station entity (111) to the user equipment (20) regarding scrambling codes, the blacklist information referring to at least one blacklisted scrambling code of at least one blacklisted base station entity that shall be prevented to be used by the user equipment (20),
wherein the mobile communication network (100) is configured such that:
-- a measurement configuration information is transmitted from the mobile communication network (100) to the user equipment (20), the measurement configuration information comprising an indication, to the user equipment (20), to perform measurements with regard to the target base station entities (310, 320), wherein a control channel of the mobile communication network (100) is used for the transmission of the measurement configuration information, wherein the measurement configuration information is split into a part, which contains the blacklist information and which is transmitted via a broadcast control channel, and an additional part, which contains further measurement configuration data describing the intended usage of the at least one blacklisted scrambling code and which is transmitted via a user specific configuration information using a dedicated control channel,
-- the requested measurements are conducted by the user equipment (20) and thereby a local network information obtained,
-- the local network information is transmitted from the user equipment (20) to the serving station entity (111),
wherein the at least one blacklisted base station entity corresponding to the at least one blacklisted scrambling code is either prevented to be measured or a measurement result corresponding to the at least one blacklisted scrambling code prevented to be transmitted to the base station entity (111).

11. Program comprising a computer readable program code which, when executed on a network node of a mobile telecommunications network (100), especially a serving base station entity (111), causes the network node of the mobile telecommunications network (100) to perform the first step of a method according to one of claims 1 to 9.

12. Program comprising a computer readable program code which, when executed on a user equipment (20), causes the user equipment (20) to perform the second and third steps of a method according to one of claims 1 to 9.

13. Computer program product comprising a computer program stored on a storage medium, the computer program comprising program code which, when executed on a network node of a mobile telecommunications network (100), especially a serving base station entity (111), causes the network node of the mobile telecommunications network (100) to perform the first step of a method according one of claims 1 to 9.

14. Computer program product comprising a computer program stored on a storage medium, the computer program comprising program code which, when executed on a user equipment (20), causes the user equipment (20) to perform the second and third steps of a method according one of claims 1 to 9.

## Patentansprüche

1. Verfahren zum Optimieren der Nutzung von Nutzerausrüstungsressourcen und/oder Netzressourcen in einem Mobilkommunikationsnetz (100) durch Verhindern der Nutzung bestimmter Funkzellen durch Nutzerausrüstungen in dem Mobilkommunikationsnetz (100),
wobei das Mobiltelekommunikationsnetz (100) ein Zugangsnetz (110) umfasst, wobei sich eine Nutzerausrüstung (20) in einer Funkzelle (11) des Zugangsnetzes (110) befindet, wobei die Funkzelle (11) durch eine bedienende Basisstationsentität (111) bedient wird, wobei die Nutzerausrüstung (20) - neben dem Empfangen von Funksignalen von der bedienenden Basisstationsentität (111) - mindestens potenziell Funksignale auch von Ziel-Basisstationsentitäten (310, 320) empfängt, wobei jeder Ziel-Basisstationsentität (310, 320) jeweils ein Verwürfelungscode zugewiesen ist, wobei die bedienende Basisstationsentität (111) eine Blacklist-Information bezüglich Verwürfelungscodes an die Nutzerausrüstung (20) sendet, wobei sich die Blacklist-Information auf mindestens einen schwarzgelisteten Verwürfelungscode mindestens einer schwarzgelisteten Basisstationsentität bezieht, von der verhindert werden soll, dass sie durch die Nutzerausrüstung (20) verwendet wird,
wobei das Verfahren die folgenden Schritte umfasst:
- Senden, in einem ersten Schritt, einer Messungskonfigurationsinformation von dem Mobilkommunikationsnetz (100) an die Nutzerausrüstung (20), wobei die Messungskonfigurationsinformation einen Hinweis an die Nutzerausrüstung (20) umfasst, Messungen mit Bezug auf die Ziel-Basisstationsentitäten (310, 320) auszuführen, wobei ein Steuerkanal des Mobilkommunikationsnetzes (100) für die Übertragung der Messungskonfigurationsinformation verwendet wird, wobei die Messungskonfigurationsinformation geteilt wird in: einen Teil, der die Blacklist-Information umfasst und der über einen Rundsende-Steuerkanal gesendet wird, und einen zusätzlichen Teil, der weitere Messungskonfigurationsdaten umfasst, welche die vorgesehene Nutzung des mindestens einen schwarzgelisteten Verwürfelungscodes beschreiben, und der über eine Nutzer-spezifische Konfigurationsinformation unter Verwendung eines dedizierten Steuerkanals gesendet wird,
- Vornehmen, durch die Nutzerausrüstung (20), und in einem zweiten Schritt im Anschluss an den ersten Schritt, der verlangten Messungen, wodurch eine lokale Netzwerkinformation erhalten wird,
- Senden, in einem dritten Schritt im Anschluss an den zweiten Schritt, der lokalen Netzwerkinformation von der Nutzerausrüstung (20) an die bedienende Basisstationsentität (111),
wobei entweder verhindert wird, dass die mindestens eine schwarzgelistete Basisstationsentität, die dem mindestens einen schwarzgelisteten Verwürfelungscode entspricht, in dem zweiten Schritt gemessen wird, oder verhindert wird, dass ein Messergebnis, das dem mindestens einen schwarzgelisteten Verwürfelungscode entspricht, in dem dritten Schritt an die Basisstationsentität (111) gesendet wird.

2. Verfahren nach Anspruch 1, wobei die Verwürfelungscodes der Ziel-Basisstationsentitäten (310, 320) die primären Verwürfelungscodes der Ziel-Basisstationsentitäten sind, wobei insbesondere der schwarzgelistete primäre Verwürfelungscode mindestens die Differenz des insgesamt möglichen primären Verwürfelungscodebereichs mit den primären Verwürfelungscodes der bevorzugten Verwürfelungscodes abdeckt.

3. Verfahren nach einem der vorangehenden Ansprüche, wobei die Ziel-Basisstationsentitäten (310, 320) UMTS (Universal Mobile Telecommunication System)-Basisstationsentitäten sind.

4. Verfahren nach einem der vorangehenden Ansprüche, wobei die bedienende Basisstationsentität (111) eine UMTS (Universal Mobile Telecommunication System)-Basisstationsentität ist und die Messungskonfigurationsinformation sich auf eine Intra-RAT (Radio Access Technology)-Messung bezieht.

5. Verfahren nach einem der vorangehenden Ansprüche, wobei die bedienende Basisstationsentität (111) eine LTE (Long Term Evolution)-Basisstationsentität ist und die Messungskonfigurationsinformation sich auf eine Inter-RAT (Radio Access Technology)-Messung bezieht.

6. Verfahren nach einem der vorangehenden Ansprüche, wobei sich die Messungskonfigurationsinformation auf Aktivmodusmobilitätsmessungen bezieht.

7. Verfahren nach einem der vorangehenden Ansprüche, wobei sich die Messungskonfigurationsinformation auf Leerlaufmodusmobilitätsmessungen, insbesondere in Bezug auf Zellenneuauswahl, bezieht.

8. Verfahren nach einem der vorangehenden Ansprüche, wobei die Messungskonfigurationsinformation die Blacklist-Information für den speziellen Zweck eines Self Organizing Network, insbesondere für die Funktionalität "Report Strongest Cells For SON", umfasst.

9. Verfahren nach einem der vorangehenden Ansprüche, wobei die mindestens eine zu vermeidende schwarzgelistete Basisstationsentität einer dominierenden Basisstationsentität (Dach-Basisstationsentität) entspricht.

10. Mobilkommunikationsnetz (100), insbesondere ein öffentliches terrestrisches Mobilfunknetz, zum Optimieren der Nutzung von Nutzerausrüstungsressourcen und/oder Netzressourcen in dem Mobilkommunikationsnetz (100) durch Verhindern der Nutzung bestimmter Funkzellen durch Nutzerausrüstungen in dem Mobilkommunikationsnetz (100), wobei das Mobiltelekommunikationsnetz (100) ein Zugangsnetz (110) umfasst, wobei sich eine Nutzerausrüstung (20) in einer Funkzelle (11) des Zugangsnetzes (110) befindet, wobei die Funkzelle (11) durch eine bedienende Basisstationsentität (111) bedient wird, wobei die Nutzerausrüstung (20) - neben dem Empfangen von Funksignalen von der bedienenden Basisstationsentität (111) - mindestens potenziell Funksignale auch von Ziel-Basisstationsentitäten (310, 320) empfängt, wobei jeder Ziel-Basisstationsentität (310, 320) jeweils ein Verwürfelungscode zugewiesen ist, wobei eine Blacklist-Information von der bedienenden Basisstationsentität (111) an die Nutzerausrüstung (20) bezüglich Verwürfelungscodes gesendet wird, wobei sich die Blacklist-Information auf mindestens einen schwarzgelisteten Verwürfelungscode mindestens einer schwarzgelisteten Basisstationsentität bezieht, von der verhindert werden soll, dass sie durch die Nutzerausrüstung (20) verwendet wird,
wobei das Mobilkommunikationsnetz (100) so konfiguriert ist, dass:
- eine Messungskonfigurationsinformation von dem Mobilkommunikationsnetz (100) an die Nutzerausrüstung (20) gesendet wird, wobei die Messungskonfigurationsinformation einen Hinweis an die Nutzerausrüstung (20) umfasst, Messungen mit Bezug auf die Ziel-Basisstationsentitäten (310, 320) auszuführen, wobei ein Steuerkanal des Mobilkommunikationsnetzes (100) für die Übertragung der Messungskonfigurationsinformation verwendet wird, wobei die Messungskonfigurationsinformation geteilt wird in: einen Teil, der die Blacklist-Information umfasst und der über einen Rundsende-Steuerkanal gesendet wird, und einen zusätzlichen Teil, der weitere Messungskonfigurationsdaten umfasst, welche die vorgesehene Nutzung des mindestens einen schwarzgelisteten Verwürfelungscodes beschreiben, und der über eine Nutzer-spezifische Konfigurationsinformation unter Verwendung eines dedizierten Steuerkanals gesendet wird,
- die verlangten Messungen durch die Nutzerausrüstung (20) vorgenommen werden und dadurch eine lokale Netzwerkinformation erhalten wird,
- die lokale Netzwerkinformation von der Nutzerausrüstung (20) zu der bedienenden Basisstationsentität (111) gesendet wird,
wobei entweder verhindert wird, dass die mindestens eine schwarzgelistete Basisstationsentität, die dem mindestens einen schwarzgelisteten Verwürfelungscode entspricht, gemessen wird, oder verhindert wird, dass ein Messergebnis, das dem mindestens einen schwarzgelisteten Verwürfelungscode entspricht, an die Basisstationsentität (111) gesendet wird.

11. Programm, das einen computerlesbaren Programmcode umfasst, der, wenn er in einem Netzknoten eines Mobiltelekommunikationsnetzes (100), insbesondere einer bedienenden Basisstationsentität (111), ausgeführt wird, den Netzknoten des Mobiltelekommunikationsnetzes (100) veranlasst, den ersten Schritt eines Verfahrens nach einem der Ansprüche 1 bis 9 auszuführen.

12. Programm, das einen computerlesbaren Programmcode umfasst, der, wenn er in einer Nutzerausrüstung (20) ausgeführt wird, die Nutzerausrüstung (20) veranlasst, den zweiten und den dritten Schritt eines Verfahren nach einem der Ansprüche 1 bis 9 auszuführen.

13. Computerprogrammprodukt, das ein Computerprogramm umfasst, das auf einem Speichermedium gespeichert ist, wobei das Computerprogramm Programmcode umfasst, der, wenn er in einem Netzknoten eines Mobiltelekommunikationsnetzes (100), insbesondere einer bedienenden Basisstationsentität (111), ausgeführt wird, den Netzknoten des Mobiltelekommunikationsnetzes (100) veranlasst, den ersten Schritt eines Verfahren nach einem der Ansprüche 1 bis 9 auszuführen.

14. Computerprogrammprodukt, das ein Computerprogramm umfasst, das auf einem Speichermedium gespeichert ist, wobei das Computerprogramm Programmcode umfasst, der, wenn er in einer Nutzerausrüstung (20), ausgeführt wird, die Nutzerausrüstung (20) veranlasst, den zweiten und den dritten Schritt eines Verfahren nach einem der Ansprüche 1 bis 9 auszuführen.

## Revendications

1. Procédé permettant d'améliorer l'usage de ressources d'équipements d'utilisateurs et/ou de ressources de réseau dans un réseau de communication mobile (100) en empêchant l'utilisation de certaines cellules radioélectriques par des équipements d'utilisateurs dans le réseau de communication mobile (100), dans lequel le réseau de télécommunications mobiles (100) comprend un réseau d'accès (110), dans lequel un équipement d'utilisateur (20) est situé dans une cellule radioélectrique (11) du réseau d'accès (110), la cellule radioélectrique (11) étant desservie par une entité station de base de desserte (111), dans lequel l'équipement d'utilisateur (20) - en plus de recevoir des signaux radioélectriques en provenance de l'entité station de base de desserte (111) - reçoit au moins potentiellement des signaux radioélectriques également en provenance d'entités stations de base cibles (310, 320), chaque entité station de base cible (310, 320) ayant un code d'embrouillage attribué, respectivement, dans lequel l'entité station de base de desserte (111) transmet des informations de liste noire concernant des codes d'embrouillage à l'équipement d'utilisateur (20), les informations de liste noire se rapportant à au moins un code d'embrouillage mis sur liste noire d'au moins une entité station de base mise sur liste noire dont l'utilisation par l'équipement d'utilisateur (20) doit être empêchée, dans lequel le procédé comprend les étapes suivantes :
- transmettre, dans une première étape, des informations de configuration de mesures, depuis le réseau de communication mobile (100) vers l'équipement d'utilisateur (20), les informations de configuration de mesures comprenant une indication, destinée à l'équipement d'utilisateur (20), pour effectuer des mesures concernant les entités stations de base cibles (310, 320), dans lequel un canal de commande du réseau de communication mobile (100) est utilisé pour la transmission des informations de configuration de mesures, dans lequel les informations de configuration de mesures sont divisées en une partie qui contient les informations de liste noire et qui est transmise par le biais d'un canal de commande de diffusion, et une partie supplémentaire qui contient d'autres données de configuration de mesures décrivant l'usage prévu de l'au moins un code d'embrouillage mis sur liste noire et qui est transmise par le biais d'informations de configuration spécifiques à l'utilisateur, à l'aide d'un canal de commande spécialisé,
- réaliser, au moyen de l'équipement d'utilisateur (20) et dans une deuxième étape ultérieure à la première étape, les mesures demandées et obtenir ainsi des informations de réseau local,
- transmettre, dans une troisième étape ultérieure à la deuxième étape, les informations de réseau local, depuis l'équipement d'utilisateur (20) vers l'entité station de base de desserte (111),
dans lequel soit la mesure de l'au moins une entité station de base mise sur liste noire correspondant à l'au moins un code d'embrouillage mis sur liste noire est empêchée dans la deuxième étape soit la transmission d'un résultat de mesure correspondant à l'au moins un code d'embrouillage mis sur liste noire, à l'entité station de base (111) est empêchée dans la troisième étape.

2. Procédé selon la revendication 1, dans lequel les codes d'embrouillage des entités stations de base cibles (310, 320) sont les codes d'embrouillage primaires des entités stations de base cibles, dans lequel en particulier, les codes d'embrouillage primaires mis sur liste noire couvrent au moins la différence entre la gamme de codes d'embrouillage primaires globale possible et les codes d'embrouillage primaires des codes d'embrouillage préférés.

3. Procédé selon l'une des revendications précédentes, dans lequel les entités stations de base cibles (310, 320) sont des entités stations de base UMTS (*universal mobile télécommunication system,* système universel de télécommunications mobiles).

4. Procédé selon l'une des revendications précédentes, dans lequel l'entité station de base de desserte (111) est une entité station de base UMTS (*universal mobile télécommunication system*), et les informations de configuration de mesures se rapportent à une mesure intra-RAT (*radio access technology,* technologie d'accès radio).

5. Procédé selon l'une des revendications précédentes, dans lequel l'entité station de base de desserte (111) est une entité station de base LTE (*long term évolution,* évolution à long terme), et les informations de configuration de mesures se rapportent à une mesure inter-RAT (*radio access technology*).

6. Procédé selon l'une des revendications précédentes, dans lequel les informations de configuration de mesures se rapportent à des mesures de mobilité en mode actif.

7. Procédé selon l'une des revendications précédentes, dans lequel les informations de configuration de mesures se rapportent à des mesures de mobilité en mode repos, concernant en particulier la resélection de cellule.

8. Procédé selon l'une des revendications précédentes, dans lequel les informations de configuration de mesures compromettent les informations de liste noire aux fins particulières du réseau auto-organisé (*self-organizing network,* SON), en particulier pour la fonctionnalité *« Report Strongest Cells for SON »* (indiquer les cellules les plus puissantes pour le réseau SON).

9. Procédé selon l'une des revendications précédentes, dans lequel l'au moins une entité station de base mise sur liste noire à éviter correspond à une entité station de base dominante (entité station de base parapluie).

10. Réseau de communication mobile (100), en particulier réseau mobile terrestre public, permettant d'améliorer l'usage de ressources d'équipements d'utilisateurs et/ou de ressources de réseau dans le réseau de communication mobile (100) en empêchant l'utilisation de certaines cellules radioélectriques par des équipements d'utilisateurs dans le réseau de communication mobile (100), dans lequel le réseau de télécommunications mobiles (100) comprend un réseau d'accès (110), dans lequel un équipement d'utilisateur (20) est situé dans une cellule radioélectrique (11) du réseau d'accès (110), la cellule radioélectrique (11) étant desservie par une entité station de base de desserte (111), dans lequel l'équipement d'utilisateur (20) - en plus de recevoir des signaux radioélectriques en provenance de l'entité station de base de desserte (111) - reçoit au moins potentiellement des signaux radioélectriques également en provenance d'entités stations de base cibles (310, 320), chaque entité station de base cible (310, 320) ayant un code d'embrouillage attribué, respectivement, dans lequel des informations de liste noire sont transmises de l'entité station de base de desserte (111) à l'équipement d'utilisateur (20) concernant des codes d'embrouillage, les informations de liste noire se rapportant à au moins un code d'embrouillage mis sur liste noire d'au moins une entité station de base mise sur liste noire dont l'utilisation par l'équipement d'utilisateur (20) doit être empêchée,
dans lequel le réseau de communication mobile (100) est configuré de telle sorte que :
- des informations de configuration de mesures sont transmises du réseau de communication mobile (100) à l'équipement d'utilisateur (20), les informations de configuration de mesures comprenant une indication, destinée à l'équipement d'utilisateur (20), pour effectuer des mesures concernant les entités stations de base cibles (310, 320), dans lequel un canal de commande du réseau de communication mobile (100) est utilisé pour la transmission des informations de configuration de mesures, dans lequel les informations de configuration de mesures sont divisées en une partie qui contient les informations de liste noire et qui est transmise par le biais d'un canal de commande de diffusion, et une partie supplémentaire qui contient d'autres données de configuration de mesures décrivant l'usage prévu de l'au moins un code d'embrouillage mis sur liste noire et qui est transmise par le biais d'informations de configuration spécifiques à l'utilisateur, à l'aide d'un canal de commande spécialisé,
- les mesures demandées sont réalisées par l'équipement d'utilisateur (20) et des informations de réseau local sont ainsi obtenues,
- les informations de réseau local sont transmises de l'équipement d'utilisateur (20) à l'entité station de desserte (111),
dans lequel soit la mesure de l'au moins une entité station de base mise sur liste noire correspondant à l'au moins un code d'embrouillage mis sur liste noire est empêchée soit la transmission d'un résultat de mesure correspondant à l'au moins un code d'embrouillage mis sur liste noire, à l'entité station de base (111) est empêchée.

11. Programme comprenant un code de programme lisible par ordinateur, qui, lorsqu'il est exécuté sur un noeud de réseau d'un réseau de télécommunications mobiles (100), en particulier une entité station de base de desserte (111), fait effectuer au noeud de réseau du réseau de télécommunications mobiles (100) la première étape d'un procédé selon l'une des revendications 1 à 9.

12. Programme comprenant un code de programme lisible par ordinateur, qui, lorsqu'il est exécuté sur un équipement d'utilisateur (20), fait effectuer à l'équipement d'utilisateur (20) les deuxième et troisième étapes d'un procédé selon l'une des revendications 1 à 9.

13. Produit-programme informatique comprenant un programme informatique stocké sur un support de stockage, le programme informatique comprenant un code de programme qui, lorsqu'il est exécuté sur un noeud de réseau d'un réseau de télécommunications mobiles (100), en particulier une entité station de base de desserte (111), fait effectuer au noeud de réseau du réseau de télécommunications mobiles (100) la première étape d'un procédé selon l'une des revendications 1 à 9.

14. Produit-programme informatique comprenant un programme informatique stocké sur un support de stockage, le programme informatique comprenant un code de programme qui, lorsqu'il est exécuté sur un équipement d'utilisateur (20), fait effectuer à l'équipement d'utilisateur (20) les deuxième et troisième étapes d'un procédé selon l'une des revendications 1 à 9.
